# EUROPÄISCHE PATENTSCHRIFT

(11) **EP 1 024 636 B1**
(45) Veröffentlichungstag und Bekanntmachung des Hinweises auf die Patenterteilung: **21.12.2005**
(21) Anmeldenummer: 00101945.4
(22) Anmeldetag: 01.02.2000
(51) Int. Cl.: H04L 29/06

(54) **Verfahren zur Konfigurierung einer Sicherheitseinrichtung in einer Kommunikationseinrichtung**
Method of configuration of a security device in a communications device
Méthode de configuration d'un dispositif de sécurité dans un dispositif de communication

(30) Priorität: 01.02.1999 DE 19903858
(43) Veröffentlichungstag der Anmeldung: 02.08.2000
(73) Patentinhaber: SIEMENS AKTIENGESELLSCHAFT, 80333 München (DE)
(72) Erfinder: Schönfeld, Norbert, 44145 Dortmund (DE); Naendorf, Andreas, 44229 Dortmund (DE)

(56) Entgegenhaltungen:
- EP-A- 0 809 383
- WO-A-98/26554
- US-A- 5 668 952
- US-A- 5 798 706
- WILDER, FLOYD: "A guide to the TCP/IP protocol suite" 1998 , ARTECH HOUSE PUBLISHERS , BOSTON, USA; XP002139388ISBN: 089006976x * Seite 194 - Seite 208 *
- CHESWICK W.R., BELLOVIN S.M.: "Firewalls und Sicherheit im Internet" 1996, ADDISON-WESLEY-VERLAG * Seite 22 - Seite 25 *

## Beschreibung

Aufgrund einer Tendenz in Firmen immer mehr Information auf elektronischem Weg auszutauschen, z.B. über elektronische Post - in der Literatur häufig als 'E-Mail' bezeichnet - oder zur Verfügung zu stellen, z.B. über das sogenannte 'Intranet' bzw. 'Internet' kommt es zunehmend sowohl durch externe als auch durch interne Teilnehmer zu einem unberechtigten Zugriff auf diese Dienste. Um einen unberechtigten Zugriff auf diese Dienste unterbinden zu können, werden Sicherheitseinrichtungen - in der Literatur häufig als 'Firewall' bezeichnet - eingerichtet, die bei einem von einem Teilnehmer initialisierten Verbindungsaufbau bzw. bei einer von einem Teilnehmer initialisierten Datenübermittlung überprüfen, ob dieser Teilnehmer zur Nutzung eines von ihm gewünschten Dienstes berechtigt ist.

Aus der deutschen Offenlegungsschrift DE 197 11 720 A1 ist eine Netzkopplungseinheit mit einer Sicherheitseinrichtung FWALL für ein Kommunikationssystem bekannt, durch welche bei einem Datentransfer zwischen an dem Kommunikationssystem angeschlossenen internen und externen Kommunikationsendgeräten überprüft wird, ob die Kommunikationsendgeräte für einen derartigen Datentransfer berechtigt sind. In der Literatur wird in diesem Zusammenhang häufig von einer, durch die Sicherheitseinrichtung realisierten Filterfunktion gesprochen. Insbesondere erfolgt über die Sicherheitseinrichtung der Netzkopplungseinheit eine sicherheitstechnische Entkopplung von an dem Kommunikationssystem angeschlossenen lokalen Netzen - in der Literatur häufig mit LAN (Lokal Area Network) abgekürzt - und einem öffentlichen Kommunikationsnetz - beispielsweise einem ISDN-orientierten Kommunikationsnetz (Integrated Services Digital Network).

Für eine Realisierung einer derartigen Filterfunktion werden in der Sicherheitseinrichtung bei einer Datenübermittlung im allgemeinen sowohl die Ursprungs- als auch die Zieladresse der zu übermittelnden Daten auf ihre Zulässigkeit für eine derartige Datenübermittlung - in der Literatur häufig als Source- und Destinationprüfung bezeichnet - überprüft. Wird eine Datenübermittlung von einem, an einem lokalen Netz angeschlossenen Kommunikationsendgerät initialisiert, ist die Ursprungs-Adresse der zu übermittelnden Daten die sogenannte LAN-Identifizierung des Kommunikationsendgerätes. Diese standardisierte LAN-Identifizierung ist durch eine sogenannte MAC-Adresse (Medium Access Control) gebildet, welche von der IEEE (Institute of Electrical and Electronical Engineers) weltweit eindeutig vergeben wird und in einem nicht-flüchtigen Speicher des Kommunikationsendgerätes fest gespeichert ist.

Für eine Konfigurierung der Sicherheitseinrichtung, d.h. für ein Zuweisen einer endgeräteindividuellen Berechtigung zu einem Kommunikationsendgerät in der Sicherheitseinrichtung ist es somit für einen Administrator notwendig, die MAC-Adresse des Kommunikationsendgerätes im lokalen Netz zu kennen. Bisher erfolgt eine Ermittlung der MAC-Adressen von, an einem lokalen Netz angeschlossenen Kommunikationsendgeräten in der Regel manuell, d.h. die MAC-Adressen werden jeweils einzeln an den angeschlossenen Kommunikationsendgeräten mittels geeigneter Vorrichtungen ausgelesen und vom Administrator manuell in eine hierfür vorgesehene Liste eingetragen.

Der vorliegenden Erfindung liegt die Aufgabe zugrunde, ein Verfahren anzugeben, durch welches eine automatische Ermittlung von MAC-Adressen der, an einem lokalen Netz angeschlossenen Kommunikationsendgeräte ermöglicht wird.

Die Lösung der Aufgabe erfolgt erfindungsgemäß mit den Merkmalen des Patentanspruchs 1.

Zum besseren Verständnis der Funktionsweise einer Sicherheitseinrichtung in einem Kommunikationssystem erscheint es erforderlich zunächst noch einmal auf bereits bekannte Prinzipien näher einzugehen.

Für eine Datenübermittlung zwischen Kommunikationseinrichtungen ist jeder Kommunikationseinrichtung eine eindeutige, d.h. weltweit gültige Identifizierung bzw. Adresse zugeordnet. Da die eine Datenübermittlung realisierenden Anwendungen - z.B. eine Datenübermittlung initialisierendes, auf einer Kommunikationseinrichtung ablaufendes Softwaremodul - auf verschiedenen Ebenen (Schichten) des OSI-Referenzmodells (Open Systems Interconnection) angesiedelt sein können, sind den Kommunikationseinrichtungen gegebenenfalls mehrere, auf unterschiedlichen Ebenen des OSI-Referenzmodells gültige Identifizierungen bzw. Adressen zugewiesen.

So ist jedem an einem lokalen Netz LAN angeschlossenen Kommunikationsendgerät, bzw. der den Anschluß an das lokale Netz realisierenden Anschlußbaugruppe eine sogenannte LAN-Identifizierung - beispielsweise eine MAC-Adresse - und eine sogenannte logische Netz-Identifizierung - beispielsweise eine IP-Adresse (Internet Protokoll) - zugeordnet. Die LAN-Identifizierung realisiert dabei eine auf der Schicht 2 (Sicherungsschicht) des OSI-Referenzmodells angesiedelte 6 Byte lange Hardware-Adresse und ist jeweils in einem auf der, den Anschluß an das lokale Netz realisierenden Anschlußbaugruppe angeordneten nicht-flüchtigen Speicher gespeichert. Die logische Netz-Identifizierung ist 4 Byte lang und ist auf der Schicht 3 (Vermittlungsschicht) des OSI-Referenzmodells angesiedelt. Die logische Netz-Identifizierung identifiziert sowohl die entsprechende Anschlußbaugruppe als auch das mit der Anschlußbaugruppe verbundene lokale Netz.

Bei einer Datenübermittlung zwischen einem ersten, an einem lokalen Netz angeschlossenen Kommunikationsendgerät und einem zweiten, an einem öffentlichen - beispielsweise einem ISDN-orientierten - Kommunikationsnetz angeschlossenen Kommunikationsendgerät erfolgt eine Realisation der Filterfunktion einer Sicherheitseinrichtung abhängig von der Richtung der Datenübermittlung auf unterschiedlichen Ebenen des OSI-Schichtenmodells. Bei einer Datenübermittlung ausgehend vom zweiten Kommunikationsendgerät zum ersten Kommunikationsendgerät wird über das öffentliche Kommunikationsnetz lediglich die IP-Adresse des zweiten Kommunikationsendgerätes an die Sicherheitseinrichtung übermittelt. Eine Realisation der Filterfunktion erfolgt somit auf Basis der IP-Adresse, so daß hier in der Literatur häufig von einer sogenannten 'IP-Firewall' gesprochen wird. Bei einer Datenübermittlung ausgehend vom ersten Kommunikationsendgerät zum zweiten Kommunikationsendgerät oder bei einer Datenübermittlung zwischen zwei an verschiedenen lokalen Netzen angeschlossenen Kommunikationsendgeräten wird - alternativ oder zusätzlich zur IP-Adresse - die MAC-Adresse des ersten Kommunikationsendgerätes an die Sicherheitseinrichtung übermittelt. Eine Realisation der Filterfunktion erfolgt somit - alternativ oder additiv zur IP-Adresse - auf Basis der MAC-Adresse, so daß hier in der Literatur häufig von einer sogenannten 'MAC-Firewall' gesprochen wird.

Ein wesentlicher Vorteil des erfindungsgemäßen Verfahrens besteht nun darin, daß bei einer automatischen Ermittlung der MAC-Adressen von an einem lokalen Netz angeschlossenen Kommunikationseinrichtungen der Zeitaufwand für die Ermittlung wesentlich verkürzt und gleichzeitig die Fehleranfälligkeit reduziert wird.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Kombination einer, dem lokalen Netz zugeordneten Netzmaske mit der IP-Adresse des lokalen Netzes eine Ermittlung der IP-Adressen aller im lokalen Netz adressierbaren Einrichtungen auf einfache Weise ermöglicht wird.

Ein Ausführungsbeispiel der Erfindung wird im folgenden anhand der Zeichnung näher erläutert.

Dabei zeigen:
- Fig. 1: ein Strukturbild zur schematischen Darstellung der an dem erfindungsgemäßen Verfahren beteiligten wesentlichen Funktionseinheiten;
- Fig. 2: ein Strukturbild zur schematischen Darstellung der an einem lokalen Netz angeschlossenen Kommunikationsendgeräte;
- Fig. 3: ein Ablaufdiagramm zur Veranschaulichung der bei einer Ermittlung der MAC-Adressen von an einem lokalen Netz angeschlossenen Kommunikationsendgeräten ablaufenden wesentlichen Verfahrensschritte.

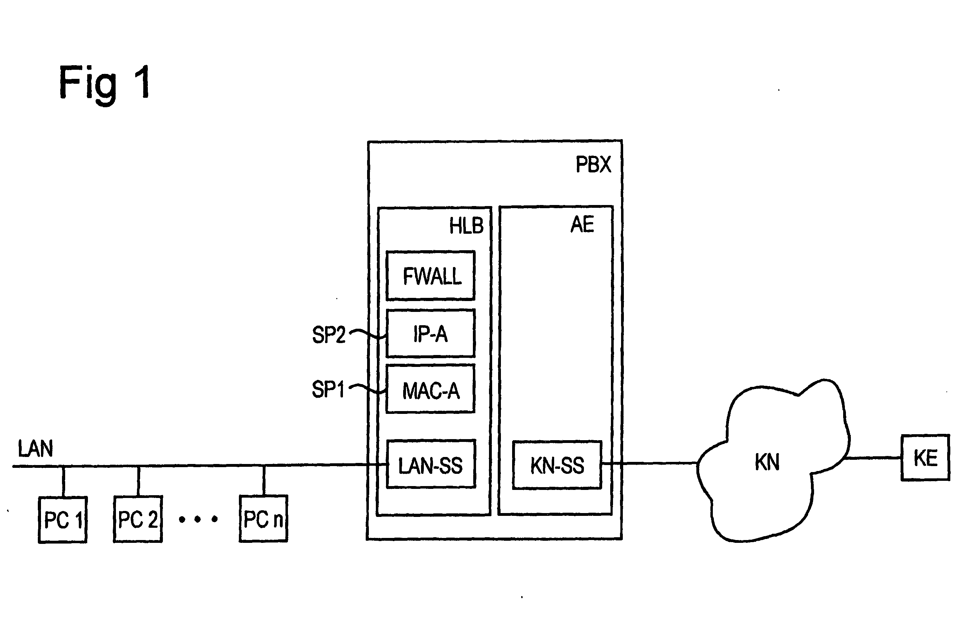

Fig. 1 zeigt eine schematische Darstellung einer Kommunikationsanlage PBX mit darin angeordneten Anschlußeinheiten zum Anschluß von Kommunikationsnetzen bzw. Kommunikationsendgeräten an die Kommunikationsanlage PBX. Beispielhaft sind eine Anschlußeinheit AE mit einer Anschlußschnittstelle KN-SS zum Anschluß eines öffentlichen Kommunikationsnetzes KN - beispielsweise eines ISDN-orientierten Kommunikationsnetzes (Integrated Services Digital Network) - und eine LAN-Anschlußeinheit HLB mit einer LAN-Anschlußschnittstelle LAN-SS zum Anschluß eines lokalen Netzes LAN (Local Area Network) dargestellt. Des weiteren sind beispielhaft an das Kommunikationsnetz KN ein Kommunikationsendgerät KE und an das lokale Netz LAN mehrere Datenverarbeitungseinrichtungen PC1,...,PCn - beispielsweise Personal Computer - angeschlossen.

Für eine, z.B. im Rahmen einer Datenübermittlung erfolgende Adressierung der LAN-Anschlußeinheit HLB ist dieser sowohl eine LAN-Identifizierung als auch eine logische Netz-Identifizierung zugeordnet. Die LAN-Identifizierung wird durch eine sogenannte MAC-Adresse MAC-A (Medium Access Control) gebildet, welche weltweit eindeutig ist und von der IEEE (Institute of Electrical and Electronical Engineers) vergeben wird. Die MAC-Adresse MAC-A realisiert eine auf der Schicht 2 (Sicherungsschicht) des OSI-Referenzmodells angesiedelte 6 Byte lange Hardware-Adresse und ist in einem, in der LAN-Anschlußeinheit HLB angeordneten nicht-flüchtigen ersten Speicher SP1 - beispielsweise in einem EPROM - gespeichert. Die logische Netz-Identifizierung wird durch eine sogenannte IP-Adresse IP-A (Internet Protocol) gebildet, welche die LAN-Anschlußeinheit HLB im lokalen Netz LAN eindeutig identifiziert und von einem Administrator der Kommunikationsanlage PBX individuell vergeben werden kann. Die 4 Byte lange IP-Adresse IP-A realisiert eine auf der Schicht 3 (Vermittlungsschicht) des OSI-Referenzmodells angesiedelte Adresse und ist in einem, in der LAN-Anschlußeinheit HLB angeordneten flüchtigen zweiten Speicher SP2 gespeichert.

Des weiteren weist die LAN-Anschlußeinheit HLB eine Sicherheitseinrichtung FWALL - in der Literatur häufig als 'Firewall' bezeichnet - auf, durch welche eine sicherheitstechnische Entkopplung des an der Kommunikationsanlage PBX angeschlossenen lokalen Netzes LAN und des öffentlichen Kommunikationsnetzes KN realisiert wird. Hierbei wird im Rahmen eines über die Kommunikationsanlage PBX initialisierten Verbindungsaufbaus bzw. einer Datenübermittlung zwischen einer Datenverarbeitungseinrichtung PC1,...,PCn und dem Kommunikationsendgerät KE sowohl die Ursprungs- als auch die Zieladresse von zu übermittelnden Daten auf ihre Zulässigkeit für diese Datenübermittlung überprüft. Dies erfolgt anhand einer in der Sicherheitseinrichtung FWALL hinterlegten - nicht dargestellten - Liste mit vorgegebenen, für eine Datenübermittlung berechtigten Adressen. Mittels der Liste erfolgt eine Überprüfung der, zusammen mit den zu übermittelnden Daten übermittelten Ursprungs-Adresse auf eine Berechtigung für die gewünschte Datenübermittlung. Ist dies der Fall, kann anschließend auch die Ziel-Adresse auf ihre Berechtigung überprüft. Alternativ kann auch überprüft werden, ob der übermittelten Ursprungs-Adresse eine Berechtigung für einen gewünschten Dienst, wie beispielsweise Verschicken einer 'E-Mail' oder Zugriff auf eine Datenverarbeitungseinrichtung im 'Internet' zugewiesen ist.

Im Rahmen einer bidirektionalen Datenübermittlung zwischen dem Kommunikationsendgerät KE und einer Datenverarbeitungseinrichtung PC1,...,PCn erfolgt eine Überprüfung der Ursprungs- bzw. Zieladresse abhängig von der Richtung der Datenübermittlung auf unterschiedlichen Ebenen des OSI-Schichtenmodells. Durch den Anschluß des Kommunikationsendgerätes KE an das öffentliche Kommunikationsnetz KN ist dem Kommunikationsendgerät KE für eine Adressierung nur eine IP-Adresse IP-A zugeordnet. Bei einer Datenübermittlung ausgehend vom Kommunikationsendgerät KE zu einer Datenverarbeitungseinrichtung PC1,...,PCn wird über das öffentliche Kommunikationsnetz KN somit nur die IP-Adresse IP-A des Kommunikationsendgerätes KE im öffentlichen Kommunikationsnetz KN an die Sicherheitseinrichtung FWALL übermittelt. Eine Überprüfung der Ursprungs- bzw. Zieladresse erfolgt somit auf Basis der IP-Adresse, so daß hier in der Literatur häufig von einer sogenannten 'IP-Firewall' gesprochen wird. Bei einer Datenübermittlung ausgehend von einer Datenverarbeitungseinrichtung PC1,...,PCn zum Kommunikationsendgerät KE wird zusätzlich zur IP-Adresse IP-A der Datenverarbeitungseinrichtung PC1,...,PCn die MAC-Adresse MAC-A der Datenverarbeitungseinrichtung PC1,...,PCn an die Sicherheitseinrichtung FWALL übermittelt. Eine Realisation die Filterfunktion erfolgt somit - alternativ oder additiv zur IP-Adresse - auf Basis der MAC-Adresse MAC-A, so daß hier in der Literatur häufig von einer sogenannten 'MAC-Firewall' gesprochen wird.

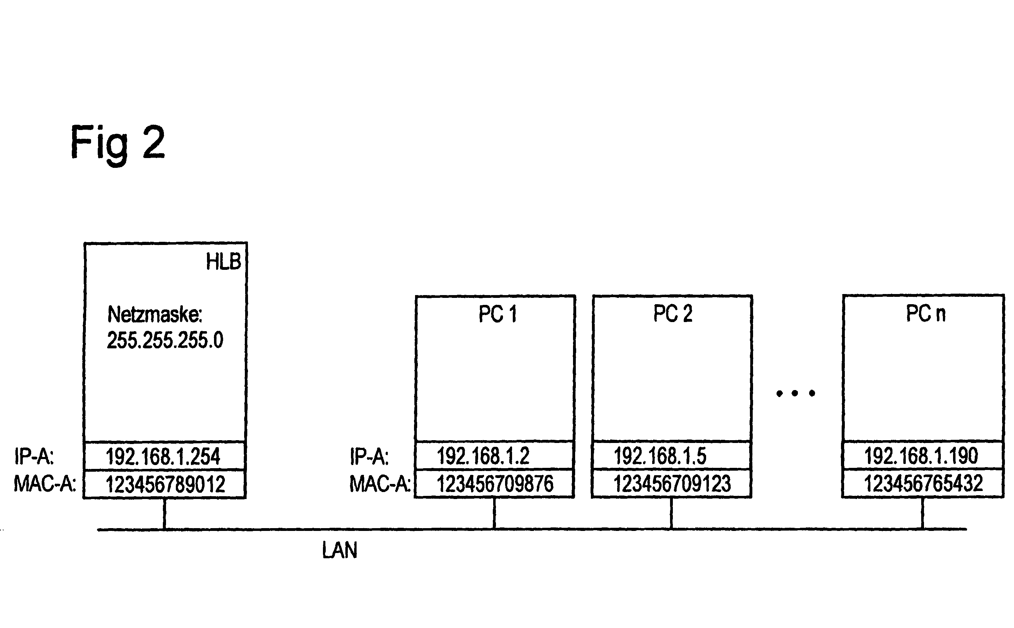

Fig. 2 zeigt eine schematische Darstellung der am lokalen Netz LAN angeschlossenen Datenverarbeitungseinrichtungen PC1,...,PCn und der LAN-Anschlußeinheit HLB. Den Datenverarbeitungseinrichtungen PC1,...,PCn und der LAN-Anschlußeinheit HLB ist jeweils eine eindeutige 6 Byte lange MAC-Adresse MAC-A und eine eindeutige 4 Byte lange IP-Adresse IP-A zugeordnet. Beim vorliegenden Ausführungsbeispiel wird die LAN-Anschlußeinheit HLB durch die MAC-Adresse MAC-A = 123456789012 und durch die IP-Adresse IP-A = 192.138.1.254 eindeutig identifiziert. Durch eine MAC-Adresse MAC-A wird die jeweilige Datenverarbeitungseinrichtung PC1,...,PCn oder die LAN-Anschlußeinheit HLB, bzw. die den Anschluß an das lokale Netz LAN realisierende - nicht dargestellte - Anschlußbaugruppe weltweit eindeutig identifiziert. Durch eine IP-Adresse IP-A hingegen werden sowohl die jeweilige Datenverarbeitungseinrichtung PC1,...,PCn oder die LAN-Anschlußeinheit HLB als auch das lokale Netz LAN weltweit eindeutig identifiziert.

Durch eine in den Datenverarbeitungseinrichtungen PC1,...,PCn bzw. der LAN-Anschlußeinheit HLB gespeicherte sogenannte Netzmaske wird festgelegt, welche der 32 Bit (entspricht 4 Byte) einer jeweiligen IP-Adresse IP-A das lokale Netz LAN und welche die, an das lokale Netz LAN angeschlossenen Datenverarbeitungseinrichtungen PC1,...,PCn bzw. die LAN-Anschlußeinheit HLB identifizieren. Beispielhaft ist eine in der LAN-Anschlußeinheit HLB gespeicherte Netzmaske 255.255.255.0 dargestellt, durch die festgelegt ist, daß die ersten 24 Bit - entspricht 3 Byte (mit einer jeweiligen Bytewertigkeit von 255) - einer IP-Adresse IP-A das lokale Netz LAN und daß die letzten 4 Bit - entspricht dem vierten Byte (mit einer Bytewertigkeit von 0) - einer IP-Adresse IP-A eine am lokalen Netz LAN angeschlossene Einrichtung (eine Datenverarbeitungseinrichtung PC1,...,PCn oder die LAN-Anschlußeinheit HLB) identifizieren. Da den Bytewertigkeiten 0 und 255 - wie anhand der Netzmaske 255.255.255.0 aufgezeigt - jeweils eine Sonderbedeutung zugewiesen ist, lassen sich mittels der vorliegenden Netzmaske 255.255.255.0 - durch die IP-Adressen IP-A = 192.168.1.1 bis IP-A = 192.168.1.254 - folglich maximal 254 am lokalen Netz LAN angeschlossene Einrichtungen adressieren.

Beim vorliegenden Ausführungsbeispiel wird das lokale Netz LAN durch die ersten 3 Bytes einer jeweiligen IP-Adresse IP-A, d.h. mittels der Adressen 192.168.1.x (x = 0,...,255) identifiziert. Die LAN-Anschlußeinheit HLB ist somit durch das vierte Byte der entsprechenden IP-Adresse IP-A = 192.168.1.254, die Datenverarbeitungseinrichtung PC1 durch das vierte Byte der entsprechenden IP-Adresse IP-A = 192.168.1.2, usw. identifiziert.

Alternativ besteht die Möglichkeit durch eine Netzmaske 255.255.0.0 für eine Adressierung der am lokalen Netz LAN angeschlossenen Einrichtungen zwei (oder mehr) Bytes einer IP-Adresse IP-A zu reservieren. Dies ist der Fall, wenn mehr als 254 Einrichtungen am lokalen Netz LAN angeschlossen werden. Des weiteren können durch eine Netzmaske 255.255.255.128 auch nur Teile des vierten Bytes - beispielsweise nur die letzten 7 Bit - einer IP-Adresse IP-A für die Adressierung der am lokalen Netz LAN angeschlossenen Einrichtungen reserviert werden. Dies ist sinnvoll, wenn beispielsweise (siehe Netzmaske) maximal 128 Einrichtungen am lokalen Netz LAN angeschlossen werden.

Bei einem Einrichten einer 'MAC-Firewall' in der Sicherheitseinrichtung FWALL der Kommunikationsanlage PBX durch einen Administrator, d.h. bei einem Zuweisen von datenverarbeitungseinrichtungs-individuellen Berechtigungen ist es notwendig die jeweiligen MAC-Adressen MAC-A der Datenverarbeitungseinrichtungen PC1,...,PCn zu kennen.

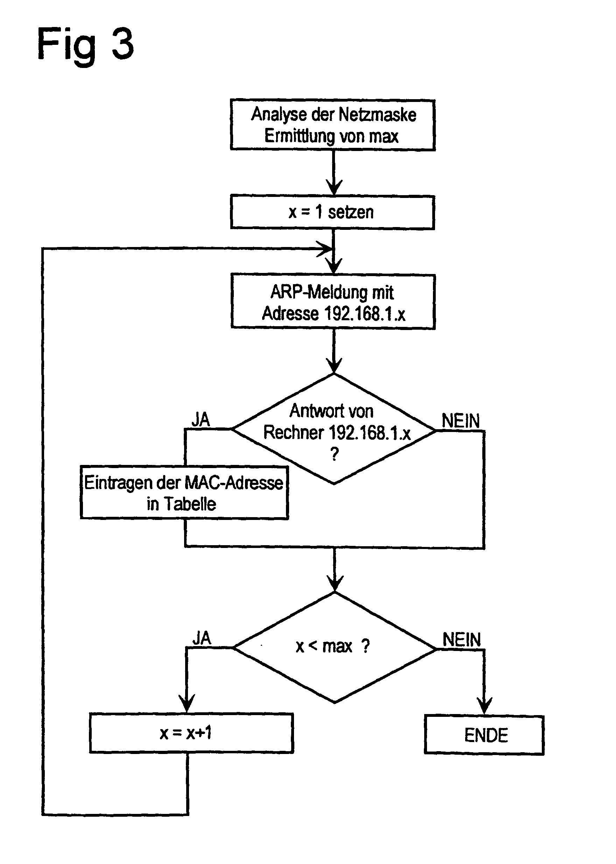

Fig. 3 zeigt ein Ablaufdiagramm zur Veranschaulichung der bei einer automatischen Ermittlung der entsprechenden MAC-Adressen MAC-A ablaufenden wesentlichen Verfahrensschritte. In einem ersten Schritt wird durch eine Analyse der in der LAN-Anschlußeinheit HLB hinterlegten Netzmaske die Anzahl max der im lokalen Netz LAN adressierbaren Einrichtungen ermittelt. Im vorliegenden Ausführungsbeispiel ist die Anzahl max = 255, d.h. es sind maximal 254 Einrichtungen durch die IP-Adressen IP-A = 192.168.1.1 bis IP-A = 192.168.1.254 adressierbar. In einem nächsten Schritt wird ein verfahrensinterner Laufparameter x auf den Wert 1 gesetzt und anschließend wird durch die LAN-Anschlußeinheit HLB eine auf einem sogenannten ARP-Protokoll (Address Resolution Protocol) basierende Anforderungsnachricht mit der IP-basierten Ziel-Adresse IP-A = 192.168.1.x abgeschickt. Ist an das lokale Netz LAN eine Datenverarbeitungseinrichtung PC1,...,PCn mit der IP-Adresse IP-A = 192.168.1.1 angeschlossen, so empfängt und verarbeitet diese die Anforderungsnachricht und übermittelt eine die MAC-Adresse IP-A der Datenverarbeitungseinrichtung PC1,...,PCn enthaltende Rückmeldung an die LAN-Anschlußeinheit HLB, welche die empfangene MAC-Adresse MAC-A in eine dafür vorgesehene Tabelle einträgt.

Nach einem Eintrag einer durch die LAN-Anschlußeinheit HLB empfangenen MAC-Adresse MAC-A in die dafür vorgesehene Tabelle oder in Fällen, in denen die LAN-Anschlußeinheit HLB nach Ablauf einer einstellbaren Zeitspanne keine Rückmeldung erhalten hat, überprüft die LAN-Anschlußeinheit, ob der verfahrensinterne Laufparameter x kleiner als die Anzahl max ist. Ist dies der Fall, wird der verfahrensinterne Laufparameter x um den Wert 1 erhöht und von der LAN-Anschlußeinheit HLB wird erneut eine auf dem ARP-Protokoll (Address Resolution Photocol) basierende Anforderungsnachricht mit der IP-basierten Ziel-Adresse IP-A = 192.168.1.x abgeschickt. Ist der verfahrensinterne Laufparameter x größer oder gleich der Anzahl max, so wird das Verfahren beendet und die erstellte Tabelle wird einem Administrator der Kommunikationsanlage PBX zur Konfigurierung der 'MAC-Firewall' in der Sicherheitseinrichtung FWALL zur Verfügung gestellt.

Beim vorliegenden Ausführungsbeispiel empfängt die LAN-Anschlußeinheit HLB beispielsweise nach dem Abschicken einer, die Datenverarbeitungseinrichtung PC1 adressierenden Anforderungsnachricht mit der IP-basierten Ziel-Adresse IP-A = 192.168.1.2 eine, die MAC-Adresse MAC-A = 123456709876 der Datenverarbeitungseinrichtung PC1 beinhaltende Rückmeldung.

## Patentansprüche

1. Verfahren zur Konfigurierung einer Sicherheitseinrichtung (FWALL) in einer Kommunikationseinrichtung (PBX),
wobei die Kommunikationseinrichtung (PBX) über eine Netz-Anschlußeinheit (HLB) mit einem, mehrere Kommunikationseinheiten (PC1,...,PCn) aufweisenden lokalen Netz (LAN) verbindbar ist,
wobei den Kommunikationseinheiten (PC1,...,PCn) und der Netz-Anschlußeinheit (HLB) jeweils eine, die jeweilige Einheit identifizierende erste Adresse (MAC-A) und eine, die jeweilige Einheit und dessen lokales Netz (LAN) identifizierende zweite Adresse (IP-A) zugeordnet ist,
wobei für eine Ermittlung der ersten Adressen (MAC-A) der Kommunikationseinheiten (PC1,...,PCn) durch die Netz-Anschlußeinheit (HLB) jeweils eine Anforderungsnachricht (ARP) an alle im lokalen Netz (LAN), mit Hilfe der zweiten Adresse (IP-A) der Netz-Anschlußeinheit (HLB) ermittelten, adressierbaren Einheiten gesendet wird,
wobei im Rahmen der Anforderungsnachricht (ARP) eine Kommunikationseinheit (PC1, ...,PCn) mittels ihrer zweiten Adresse (IP-A) adressiert wird, und
wobei in Fällen, in denen eine Kommunikationseinheit (PC1, ...,PCn) infolge einer empfangenen Anforderungsnachricht (ARP) eine Bestätigungsmeldung an die Netz-Anschlußeinheit (HLB) zurückübermittelt, die dabei mitübermittelte erste Adresse (MAC-A) der Kommunikationseinheit (PC1,...,PCn) in der Sicherheitseinrichtung (FWALL), der betreffenden Kommunikationseinheit (PC1, ...,PCn) zugeordnet gespeichert wird.

2. Verfahren nach Anspruch 1,
**dadurch gekennzeichnet,**
**daß** durch eine, dem lokalen Netz (LAN) individuell zugeordnete und in der Netz-Anschlußeinheit (HLB) gespeicherte Netzadressenmaske und durch die zweite Adresse (IP-A) der Netz-Anschlußeinheit (HLB) die zweiten Adressen (IP-A) aller im lokalen Netz (LAN) adressierbaren Einheiten ermittelt werden.

3. Verfahren nach Anspruch 2,
**dadurch gekennzeichnet,**
**daß** eine Anforderungsnachricht an alle, in dem lokalen Netz (LAN) zur Adressierung von Einheiten möglichen zweiten Adressen (IP-A) übermittelt werden.

4. Verfahren nach einem der vorhergehenden Ansprüche,
**dadurch gekennzeichnet,**
**daß** die erste Adresse (MAC) einer Einheit (HLB; PC1,...,PCn) die MAC-Adresse dieser Einheit (HLB; PC1,...,PCn) im lokalen Netz (LAN) ist.

5. Verfahren nach einem der vorhergehenden Ansprüche,
**dadurch gekennzeichnet,**
**daß** die zweite Adresse (IP) einer Einheit (HLB; PC1,...,PCn) die IP-Adresse dieser Einheit (HLB; PC1,...,PCn) im lokalen Netz (LAN) ist.

6. Verfahren nach einem der vorhergehenden Ansprüche,
**dadurch gekennzeichnet,**
**daß** die Anforderungsnachricht (ARP) auf dem standardisierten ARP-Protokoll basiert.

## Claims

1. Method for configuring a security device (FWALL) in a communication device (PBX),
where the communication device (PBX) can be connected via a network interface unit (HLB) to a local area network (LAN) which has a plurality of communication units (PC1, ..., PCn),
where the communication units (PC1, ..., PCn) and the network interface unit (HLB) each have an associated first address (MAC-A) identifying the respective unit and an associated second address (IP-A) identifying the respective unit and the latter's local area network (LAN),
where to ascertain the first addresses (MAC-A) of the communication units (PC1, ..., PCn) the network interface unit (HLB) sends a respective request message (ARP) to all addressable units in the local area network (LAN) which have been ascertained using the second address (IP-A) of the network interface unit (HLB),
where the request message (ARP) involves a communication unit (PC1, ..., PCn) being addressed using its second address (IP-A), and
where in cases in which a communication unit (PC1, ..., PCn) returns a confirmation message to the network interface unit (HLB) as a result of a received request message (ARP) the concomitantly transmitted first address (MAC-A) of the communication unit (PC1, ..., PCn) is stored in the security device (FWALL) in association with the relevant communication unit (PC1, ..., PCn).

2. Method according to Claim 1,
**characterized**
**in that** a network address mask which is individually associated with the local area network (LAN) and which is stored in the network interface unit (HLB) and the second address (IP-A) of the network interface unit (HLB) are used to ascertain the second addresses (IP-A) of all addressable units in the local area network (LAN).

3. Method according to Claim 2,
**characterized**
**in that** a request message is transmitted to all second addresses (IP-A) in the local area network (LAN) which are possible for addressing units.

4. Method according to one of the preceding claims,
**characterized**
**in that** the first address (MAC) of a unit (HLB; PC1, ..., PCn) is the MAC address of this unit (HLB; PC1, ..., PCn) in the local area network (LAN).

5. Method according to one of the preceding claims,
**characterized**
**in that** the second address (IP) of a unit (HLB; PC1, ..., PCn) is the IP address of this unit (HLB; PC1, ..., PCn) in the local area network (LAN).

6. Method according to one of the preceding claims,
**characterized**
**in that** the request message (ARP) is based on the standardized ARP protocol.

## Revendications

1. Procédé de configuration d'un dispositif de sécurité (FWALL) dans un dispositif de communication (PBX),
dans lequel le dispositif de communication (PBX) peut être relié par l'intermédiaire d'une unité de raccordement de réseau (HLB) à un réseau local (LAN) comportant plusieurs unités de communication (PC1 à PCn),
dans lequel il est associé aux unités de communication (PC1 à PCn) et à l'unité de raccordement de réseau (HLB) à chaque fois une première adresse (MAC-A) identifiant l'unité respective et une deuxième adresse (IP-A) identifiant l'unité respective et le réseau local (LAN) de celle-ci,
dans lequel, pour une détermination des premières adresses (MAC-A) des unités de communication (PC1 à PCn), l'unité de raccordement de réseau (HLB) envoie à chaque fois un message de demande (ARP) à toutes les unités adressables dans le réseau local (LAN) et déterminées à l'aide de la deuxième adresse (IP-A) de l'unité de raccordement de réseau (HLB),
dans lequel, dans le cadre du message de demande (ARP), une unité de communication (PC1 à PCn) est adressée au moyen de sa deuxième adresse (IP-A), et
dans lequel, si une unité de communication (PC1 à PCn) transmet en réponse à un message de demande reçu (ARP) un message de confirmation à l'unité de raccordement de réseau (HLB), la première adresse (MAC-A), alors transmise conjointement, de l'unité de communication (PClà PCn) est mémorisée dans le dispositif de sécurité (FWALL) en association avec l'unité de communication concernée (PC1 à

2. Procédé selon la revendication 1,
**caractérisé par le fait que**, avec un masque d'adresse de réseau associé individuellement au réseau local (LAN) et mémorisé dans l'unité de raccordement de réseau (HLB) et avec la deuxième adresse (IP-A) de l'unité de raccordement de réseau (HLB), les deuxièmes adresses (IP-A) de toutes les unités adressables dans le réseau local (LAN) sont déterminées.

3. Procédé selon la revendication 2,
**caractérisé par le fait qu'**un message de demande est transmis à toutes les deuxièmes adresses (IP-A) possibles dans le réseau local (LAN) pour l'adressage d'unités.

4. Procédé selon l'une des revendications précédentes,
**caractérisé par le fait que** la première adresse (MAC) d'une unité (HLB ; PC1 à PCn) est l'adresse MAC de cette unité (HLB ; PC1 à PCn) dans le réseau local (LAN).

5. Procédé selon l'une des revendications précédentes,
**caractérisé par le fait que** la deuxième adresse (IP) d'une unité (HLB ; PC1 à PCn) est l'adresse IP de cette unité (HLB ; PC1 à PCn) dans le réseau local (LAN).

6. Procédé selon l'une des revendications précédentes,
**caractérisé par le fait que** le message de demande (ARP) est basé sur le protocole ARP standard.
